**Europäisches Patentamt**

**European Patent Office**

**Office européen des brevets**

(19)

(11) Veröffentlichungsnummer: **0 095 673**
**B2**

(12) **NEUE EUROPÄISCHE PATENTSCHRIFT**

(45) Veröffentlichungstag der neuen Patentschrift:
08.11.89

(51) Int. Cl.⁴: **G 01 D 5/26**

(21) Anmeldenummer: **83104980.4**

(22) Anmeldetag: **19.05.83**

(54) Faseroptischer Sensor zur Messung physikalischer Grössen.

(30) Priorität: **27.05.82 SE 8203297**

(43) Veröffentlichungstag der Anmeldung:
**07.12.83 Patentblatt 83/49**

(45) Bekanntmachung des Hinweises auf die Patenterteilung:
**21.01.87 Patentblatt 87/4**

(45) Bekanntmachung des Hinweises auf die Entscheidung über den Einspruch:
**08.11.89 Patentblatt 89/45**

(84) Benannte Vertragsstaaten:
**CH DE FR GB LI**

(56) Entgegenhaltungen:
EP-A- 0 049 048
DE-A- 2 755 713
DE-A- 2 908 770
US-A- 4 185 201
US-A- 4 223 226
US-A- 4 259 587
US-A- 4 321 831

Appl. Opt.8 (1969) 1087-1102 Phys. Rev. 1966, 251-258
Rev. Sci. Instrum. 51(7), Jul.1980, S. 882-884
Römpps Chemie-Lexikon, 8.Auflage (1981),
Franckh'sche Verlagshandlung Stuttgart (DE), Seite
1484

(73) Patentinhaber: **ASEA AB, S-721 83 Västeras (SE)**

(72) Erfinder: **Brogardh, Torgny, Prof., Platverksgatan 140,
S-724 74 Västeras (SE)**
Erfinder: **Hök, Bertil, Dr. Phil., Sportfiskargatan 53,
S-723 48 Västeras (SE)**
Erfinder: **Ovrén, Christer, Dr. Ing., Vilddjursvägen 9,
S-722 43 Västeras (SE)**

(74) Vertreter: **Boecker, Joachim, Dr.-Ing.,
Rathenauplatz 2-8, D-6000 Frankfurt a.M. 1 (DE)**

Die Erfindung betrifft einen faseroptischen Sensor zum Messen physikalischer Größen gemäß dem Oberbegriff des Anspruches 1. Als physikalische Größen kommen beispielsweise in Betracht eine Temperatur, eine Lage, eine Kraft, ein Niveau, ein Druck, ein Fluss, eine Beschleunigung, eine magnetische Feldstärke, eine elektrische Feldstärke oder eine mechanische Verformung(Rev. Sci. Instr. 51(7), 1980, Seite 882–884).

Bisherige Sensoren dieser Art zeigen hinsichtlich ihrer mechanischen Ausführung und Fertigungstechnik, der Temperatureigenschaften und der Möglichkeit einer Zeit- oder Frequenzaufteilung der Signalinformation mit Hilfe elektronischer Standardbausteine gewisse Begrenzungen. Auch ist die Lumineszenzausbeute der bekannten Sensoren mittels konventionellen Phosphors gering.

Der Erfindung liegt die Aufgabe zugrunde, einen Sensor der eingangs genannten Art zu entwickeln, der hinsichtlich der vorgenannten Punkte den bekannten Sensoren überlegen ist.

Zur Lösung dieser Aufgabe wird ein faseroptischer Sensor nach dem Oberbegriff des Anspruches 1 vorgeschlagen, der erfindungsgemäß die im kennzeichnenden Teil des Anspruches 1 genannten Merkmale hat.

Vorteilhafte Weiterbildungen der Erfindung sind in den Unteransprüchen genannt.

Gemäß der Erfindung wird also im Sensor für den lumineszierenden Körper eine in diesem Zusammenhang bisher nicht verwendete Materialsorte benutzt. Das lumineszierende Material besteht aus atomar lokalisierten Lumineszenzzentren, die als feste Lösung in ein amorphes oder monokristallines Trägermaterial eingehen, wie z.B. Ionen von Neodym oder einem anderen Metall der seltenen Erden in Glas oder einem kristallinen Material, z.B. Ytrium-Aluminium-Granat (YAG). Mit einem solchen Sensor erzielt man Vorteile bei der mechanischen Ausführung und Fertigungstechnik, gute Temperatureigenschaften, die Möglichkeit einer Zeit- oder Frequenzaufteilung der Signalinformation mit Hilfe elektronischer Standardbausteine sowie eine hohe Lumineszenzausbeute im Vergleich zu konventionellem Phosphor. Im einzelnen kann zu den Vorteilen folgendes gesagt werden:

Die Lumineszenzeigenschaften werden in erster Linie durch die Metallionen bestimmt, während das Trägermaterial die mechanischen und chemischen Eigenschaften bestimmt. Hierdurch erhält man große Freiheiten bei der mechanischen Ausführung und der Wahl des Fertigungsverfahrens.

Es läßt sich eine gute Temperaturstabilität der Intensität und Wellenlänge des Lumineszenzlichtes und der optischen Zeitkonstante, mit der der Lumineszenzverlauf abklingt (siehe Thornton und andere Appl. Opt. 8 (1969) 1087–1102), innerhalb großer Temperaturintervalle erreichen, oder die Temperaturabhängigkeit der genannten Größen kann durch die Konzentration der Neodymionen genau eingestellt werden (Asawa, Robinson Phys. Rev. (1966) 251–258).

Die Zeitkonstante der Lumineszenz liegt in der Größenordnung von mehreren hundert µs, was eine Zeit- oder Frequenzaufteilung der Signalinformation mit Hilfe elektronischer Standardbauteile ermöglicht.

Dadurch, daß die lumineszierenden Ionen als feste Lösung in dem Trägermaterial enthalten sind, das entweder eine amorphe oder eine monokristallinische Struktur hat, vermeidet man Verluste durch Ausbreitung und Reflexion, die in Phosphor mit polykristalliner Struktur oder in Suspensionen auftreten.

Anhand der in den Figuren gezeigten Ausführungsbeispiele soll die Erfindung näher erläutert werden. Es zeigen

Figur 1A ein Ausführungsbeispiel eines Temperaturgebers gemäß der Erfindung,

Figur 1B die Abhängigkeit der Zeitkonstante von der Ionen-Konzentration und der Temperatur,

Figur 2 verschiedene Ausführungsformen von Sensoren gemäß der Erfindung zur Lagemessung, bei denen das lumineszierende Material in Abhängigkeit der Meßgröße seine Lage ändert,

Figur 3 ein Ausführungsbeispiel eines Sensors gemäß der Erfindung zur Lagemessung mit einem bewegbaren Schirm zwischen lichtleitender Faser und lumineszierendem Material,

Figur 4 ein Ausführungsbeispiel eines Sensors gemäß der Erfindung zur Messung von Magnetfeldern, elektrischen Feldern oder mechanischen Verformungen,

Figur 5 einen in den Raum abstrahlenden Sensor zur Erfassung eines Temperaturschwellwertes,

Figur 6 Beispiele für Anschlußmöglichkeiten zwischen der optischen Faser und dem Sensor.

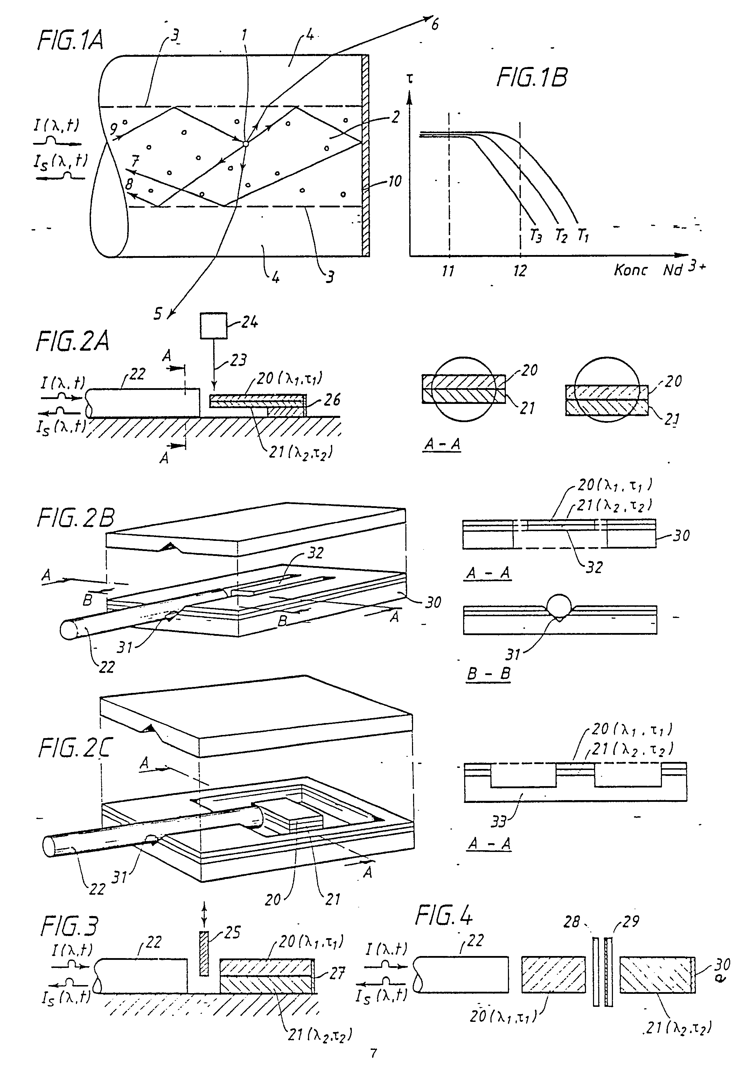

Der in Figur 1A gezeigte Sensor wird von ihm zugeführter optischer Energie (Licht) angeregt, die durch die Intensität I(t, λ) charakterisiert ist, die eine Funktion der Zeit t und der Wellenlänge λ ist. Der Sensor enthält atomar verteilte Lumineszenzzentren 1, in welchen das Anregungslicht absorbiert und als Lumineszenzlicht remittiert wird. Die Lumineszenzzentren sind als feste Lösung in dem Trägermaterial 2 enthalten, das in Fig. 1A die Form einer optischen Faser mit totalreflektierenden Zwischenflächen 3 hat, die dadurch gewonnen werden, daß das Material des Mantels 4 der Faser einen kleineren Brechungsindex hat als das Trägermaterial 3, welches den Kern der Faser bildet. Bei Anregung eines Lumineszenzzentrums 1 durch einen Lichtstrahl 9 sendet dieses Lumineszenzlicht nach allen Richtungen, wobei ein Teil in der Umgebung verschwindet, was in der Figur durch die Strahlen 5 und 6 dargestellt ist, während andere Strahlen in die Faser zurückgeleitet werden (Strahl 7 und 8). Ein reflektierender Belag 10 auf der Endfläche der Faser verkleinert die Verluste. Das Lumineszenzlicht wird durch seine Intensität $I_S(t, λ)$ charakterisiert, deren zeitlicher Verlauf einerseits von I(t, λ) und andererseits von den Übertragungseigenschaften des Sensormaterials abhängig ist. In dem gegebenen Ausführungsbeispiel ist z.B.

wobei τ die optische Zeitkonstante des Sensormaterials ist. Figur 1B zeigt die Abhängigkeit der Zeitkonstante von der Konzentration der Neodymionen und der Temperatur, was durch die Kurvenschar $T_1$, $T_2$, $T_3$ veranschaulicht ist. Durch die Wahl eines geeigneten Wertes (bei 12) für die Konzentration ist τ in dem Intervall $T_1$, $T_3$ temperaturabhängig, während die

Temperaturabhängigkeit bei niedrigeren Konzentrationen (bei 11) klein ist. Durch Messung des Zeitverlaufs des lumineszierenden Lichtes ist es also unter gewissen Bedienungen möglich, die Temperatur des Lumineszierenden Materials zu messen.

Die Möglichkeit, auch $\tau$ von der Temperatur unabhängig zu machen. (Abschnitt 11 in Figur 1B) wird bei den übrigen Ausführungsformen für Sensoren zur Messung anderer Größen als der Temperatur ausgenutzt. Figur 2 zeigt einen Sensor zur Lagemessung, der aus zwei nebeneinanderliegenden optischen Materialbereichen 20, 21 besteht (siehe Fig. 2A sowie den Schnitt A-A), von denen jeder Materialbereich durch seine Übertragungsfunktion von $I(t, \lambda)$ in $I_s(t, \lambda)$ charakterisiert ist. Die Übertragungsfunktionen sind mit $(\lambda_1, \tau_1)$ bzw. $(\lambda_2, \tau_2)$ angegeben, wobei $\lambda$ eine bestimmte spektrale Zusammensetzung (Hauptwellenlänge) des Lumineszenzlichtes und $\tau$ die Zeitkonstante für das Lumineszenzlicht ist. Als Detektor ist eine Anordnung erforderlich, mit deren Hilfe die relativen Intensitätsbeiträge von den Bereichen 20 , 21 erfaßt werden können. Eine solche Anordnung ist in der schwedischen Patentanmeldung 8202093-4 (SE-B-435 967) beschrieben.

In Figur 2A bilden die beiden Materialbereiche 20, 21 einen einseitig fest eingespannten Balken, der unter der Wirkung einer Kraft 23 elastisch gebogen wird, wobei die optische Kopplung zwischen der Faser 22 einerseits und den Bereichen 20, 21 anderseits von dem Grad der Durchbiegung des Balkens abhängt. Dadurch wird der Quotient aus den von den beiden Materialbereichen 20 und 21 in die Faser übertragenen Lumineszenzlichtmengen ein Maß für die Kraft 23. Diese wird von dem Übertragungsglied 24 in Abhängigkeit der zu messenden Größe bestimmt. Bei einer Druckmessung kann das Glied 24 eine Membran sein und bei einer Schwingungsmessung eine Masse. Die Messung eines Flüssigkeitsstandes und eines Flüssigkeitsflusses kann durch Druckmessung entsprechend dem Ausführungsbeispiel vorgenommen werden.

In den Figuren B und C sind solche Ausführungsbeispiele näher dargestellt. Die Materialbereiche 20, 21 sind hier auf einem Substratmaterial 30 aufgebracht, bei dem es sich z.B. um monokristallines Silizium handeln kann. Für die Herstellung solcher Strukturen sind Verfahren bekannt, die auf Fotolithografie und Ätzung zur Herstellung dreidimensionaler Strukturen basieren. Eine eingeätzte V-Nut 31 dient zur Definition der Lage der Faser 22, und auch die räumliche Formgebung, in Figur 2B ein einseitig fest eingespannter Balken 32 und in Figur 2C eine Membran 33, können nach bekannten Verfahren durch Ätzen hergestellt werden. Als Verfahren zum Aufbringen der Schichten 20, 21 kommen in Frage Atomisierung, Aufdampfen, Siebdruck oder eine Kombination dieser Verfahren.

Figur 3 zeigt eine andere Ausführungsform eines Sensors zur Lagemessung. Bei dieser Ausführungsform sind die Materialbereiche 20, 21 im Verhältnis zur optischen Faser 22 ortsfest angeordnet. Es ist ein beweglicher Schirm 25 vorhanden, der die Faser mehr oder weniger gegenüber den Materialbereichen 20 und 21 abschirmt, so daß eine Veränderung der relativen Lage des Schirms 25 eine Veränderung der relativen Intensitätsanteile von den Materialbereichen 20, 21 bewirkt. In dem gezeigten Fall sowie bei dem Ausführungsbeispiel gemäß Figur 2 sind die der Faser 22 abgekehrten Enden der Materialbereiche 20, 21 mit reflektierenden Belägen 26 bzw. 27 belegt, wodurch Verluste durch die belegten Flächen vermieden werden.

Figur 4 zeigt ein Ausführungsbeispiel für einen Sensor, der sich zum Messen von elektrischen und magnetischen Feldern sowie mechanischer Verformungen eignet. Die Ausführungsform arbeitet wie die gemäß Figur 2 und 3 mit zwei lumineszierenden Materialbereichen 20, 21. In Figur 4 ist die Absorption in dem Bereich 20 durch die Wahl der Konzentration und der geometrischen Gestalt (Länge) so gering, daß genügend Anregungslicht den Materialbereich 20 durchdringt und im Materialbereich 21 Lumineszenz anregen kann. Die Platten 28 und 29 haben polarisierende Eigenschaften. Die Lage der Polarisationsachse der Platte 29 wird von der zu messenden Größe beeinflußt. Zur Messung von elektrischen Feldern wird z.B. der Pockels-Effekt, zur Messung von Magnetfeldern der Faraday-Effekt und zur Messung von mechanischen Verformungen der elastooptische Effekt ausgenutzt. Der reflektierende Belag 30a kann auch polarisationsdrehende Eigenschaften haben. Bei dem Ausführungsbeispiel wird die Lumineszenz in dem Bereich 20 praktisch nicht von der Meßgröße beeinflußt, da der Belag 30a als Interferenzfilter ausgebildet ist, das $I(\tau, t)$ transmittiert und $I_s(\tau_2, t)$ reflektiert und daher als Referenz dient, während das der Faser 22 zugeführte Lumineszenzlicht von dem Bereich 21 von der Lage der Polarisationsachse in der Platte 29 und somit von der Meßgröße abhängig ist.

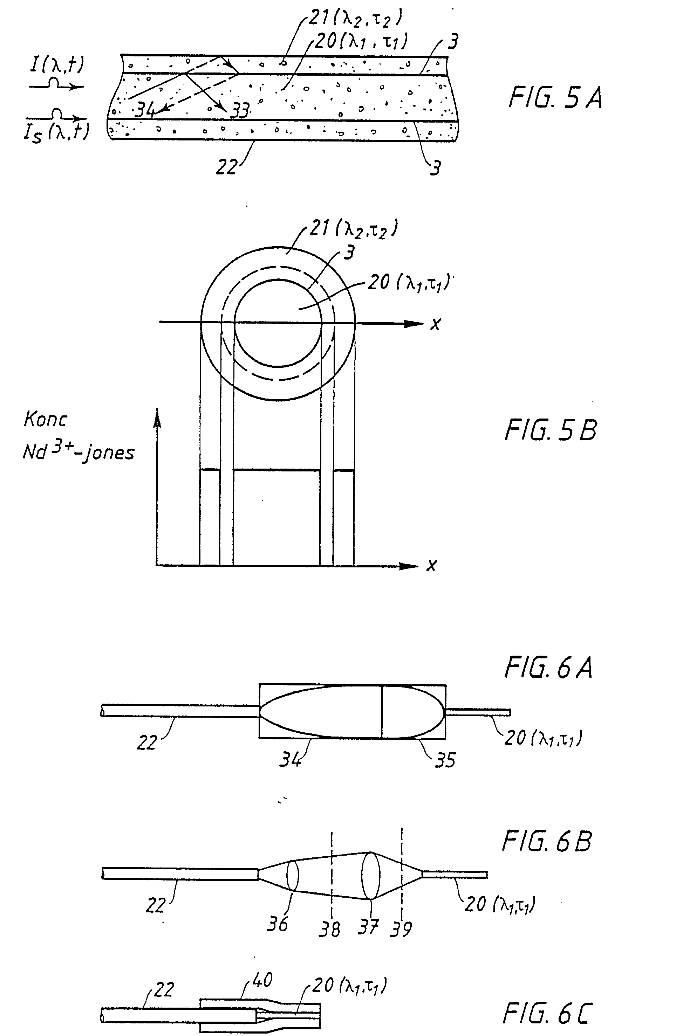

Figur 5 zeigt ein Ausführungsbeispiel eines Schwellwertsensors für eine Temperaturüberwachung über einen größeren Bereich, der von der Länge der Sensorfaser bestimmt wird. Die Materialbereiche 20 und 21 sind hier geometrisch in Gestalt von Kern und Mantel einer optischen Faser wie in Figur 1 angeordnet, haben jedoch eine geringere Ionen-Konzentration (die Konzentrationen liegen also im Bereich um 11 in Figur 1B). Das Trägermaterial für die Bereiche 20, 21 ist so gewählt, daß unterhalb eines bestimmten Temperaturschwellwertes eine Totalreflexion an der Zwischenfläche 3 stattfindet. Die Temperaturkoeffizienten für die Brechungsindizes des Kern- und Mantelmaterials sind so gewählt, daß oberhalb des Temperaturschwellwertes Licht in den Bereich 21 eindringen kann, so daß dort Lumineszenzlicht erzeugt wird, das durch die Übertragungsfunktion $(\lambda_2, \tau_2)$ charakterisiert ist und erfaßt werden kann (Strahl 34a).

Eine vorteilhafte Teilausführung der Sensorfaser besteht darin, den am dichtesten an der Zwischenfläche 3 liegenden Bereich an lumineszierenden Ionen zu verarmen, um eine Anregung von der abklingenden Welle im Mantel bei unter dem Schwellwert liegenden Temperaturen zu vermeiden. Wenn $\tau_1$ und $\tau_2$ in der Größenordnung von Nanosekunden liegen, ist es ebenfalls möglich, Information darüber zu bekommen, an welcher Stelle in Längsrichtung der Faser der Temperaturschwellwert überschritten wurde. Die Lagebestimmung kann dann nach der bekannten Puls-Echo-Technik vorgenommen werden.

Das lumineszierende Material kann auch in fester Lösung in dem Kern und/oder dem Mantel 4 (21) einer optischen Faser enthalten sein. Diese Faser kann längs einer Meßstrecke angeordnet sein. Die Faser ist an eine optoelektronische Meßanordnung angeschlossen zum Messen von Zeitkonstanten und/oder relativer Amplituden oder Phasenlagen für verschiedene Modulationsfrequenzen des Lumineszenzlichtes des genannten Materials. Diese Meßanordnung mißt einen Extremwert längs der Meßstrecke, indem sie die maximale Zeitkonstante oder die obere Grenzfrequenz des Lumineszenzlichtes mißt.

Bei allen beschriebenen Ausführungsformen sind die optische und mechanische Verbindung zwischen der Faser 22 und den Materialbereichen 20, 21 für die Leistung des Sensors wichtig. Figur 6 zeigt einige Ausführungsbeispiele hierfür.

In Figur 6A werden für die Verbindung sogenannte Selfoc GRIN-Linsen 34, 35 zur Erhöhung der numerischen Apertur verwendet. Dasselbe ist mit klassischen Linsen 36, 37 möglich, wie es Figur 6B zeigt. Die Verbindung ist im Schnitt 38 verhältnismässig unempfindlich gegen Lageabweichungen, aber empfindlich für Winkelabweichungen, während es für den Schnitt 39 genau umgekehrt ist.

Figur 6c zeigt schließlich eine Verbindung mit gleichzeitiger Kapselung, bei der ein Rohr 40 aus beispielsweise Glas sowohl über die Faser 22 wie über den leiterförmigen Materialbereich 20 geschrumpft ist. Das Rohr 40 kann als Mantelmaterial für das Kernmaterial 20 dienen (Bereich 4 in Figur 1A oder 21 in Figur 5).

## Patentansprüche

1. Faseroptischer Sensor zur Messung physikalischer Größen, welcher Sensor mindestens ein lumineszierendes Material enthält, das bei Bestrahlung mit Anregungslicht Licht mit einer anderen Wellenlänge als der des Anregungslichtes ausstrahlt, wobei das/die lumineszierende(n) Material(ien) aus atomar verteilten lumineszierenden Lumineszenzzentren (1) aufgebaut ist/sind, die als feste Lösung in einem amorphen oder monokristallinen Trägermaterial (2) enthalten sind, welches im wesentlichen optisch transparent ist, dadurch gekennzeichnet, daß die geometrische Form des Trägermaterials die mindestens eines optischen Wellenleiters, zum Beispiel einer optischen Faser, ist.

2. Sensor nach Anspruch 1, dadurch gekennzeichnet, daß die Lumineszenzzentren aus Ionen, zum Beispiel der Metalle der seltenen Erden, bestehen.

3. Sensor nach einem der vorhergehenden Ansprüche, dadurch gekennzeichnet, daß das Trägermaterial elektrisch isolierend ist und daß es chemisch aus Oxyden vom im wesentlichen Silizium, Bor, Germanium und Phosphor sowie einer Einmischung von Metalloxyden aufgebaut ist.

4. Sensor nach einem der vorhergehenden Ansprüche, dadurch gekennzeichnet, daß die Intensität der Lumineszenz, die Wellenlänge der Lumineszenz, die den zeitlichen Verlauf der Lumineszenz beschreibende Zeitkonstante (optische Zeitkonstante) und/oder der Intensitätsquotient der Lumineszenz bei zwei Wellenlängen oder Zeitkonstanten ein Maß für die zu messende Größe ist.

5. Sensor nach einem der vorhergehenden Ansprüche, dadurch gekennzeichnet, daß das lumineszierende Material aus mindestens zwei räumlich abgegrenzten Materialbereichen (20,21) besteht, die untereinander unterschiedliche Absorptions- und/ oder Lumineszenzeigenschaften hinsichtlich der Wellenlänge oder der optischen Zeitkonstante des lumineszierenden Lichtes haben.

6. Sensor nach Anspruch 5, dadurch gekennzeichnet, daß die Lage der abgegrenzten Materialbereiche (20, 21) zueinander oder zwischen diesen und einem festen oder beweglichen Körper, wie zum Beispiel einer optischen Faser, einem Schirm (25) oder einem Spiegel (30a), ein Maß für die zu messende Größe ist.

7. Sensor nach Anspruch 5 oder 6, dadurch gekennzeichnet, daß die räumlich abgegrenzten Materialbereiche (20, 21) auf einem Substratmaterial (30) angebracht sind.

8. Sensor nach Anspruch 5, dadurch gekennzeichnet, daß die beiden Materialbereiche (20, 21) so angeordnet und beschaffen sind, daß sich das Anregungslicht unterhalb eines Temperaturschwellenwertes nur im Materialbereich (20) ausbreitet und oberhalb des Temperaturschwellenwertes sich auch im Materialbereich (21) ausbreitet.

9. Sensor nach Anspruch 8, dadurch gekennzeichnet, daß die optischen Zeitkonstanten für die Lumineszenz in den Materialbereichen (20, 21) erheblich kleiner sind als die Laufzeit des Lichtes durch die genannten Materialbereiche.

10. Sensor nach Anspruch 5, dadurch gekennzeichnet, daß er mindestens zwei Elemente (28, 29) mit polarisierenden Eigenschaften enthält, wobei die veränderliche Lage der Polarisationsachse in mindestens dem einen Element (29) ein Maß für die Meßgröße ist.

11. Sensor nach Anspruch 10, dadurch gekennzeichnet, daß die veränderliche Lage der Polarisationsachse in mindestens dem einen Element (29) ein Maß für eine elektrische oder magnetische Feldstärke oder für eine mechanische Verformung ist.

12. Sensor nach einem der Ansprüche 4 bis 11, dadurch gekennzeichnet, daß die Intensität, die Wellenlänge und/oder die Zeitkonstante des Lumineszenzlichtes in mindestens einem Temperaturintervall im wesentlichen temperaturunabhängig sind.

13. Sensor nach einem der Ansprüche 4 bis 11, dadurch gekennzeichnet, daß die Intensität, die Wellenlänge und/oder die optische Zeitkonstante des Lumineszenzlichtes in mindestens einem Temperaturintervall ein Maß für die Temperatur ist.

14. Sensor nach einem der Ansprüche 1 bis 5, dadurch gekennzeichnet, daß das lumineszierende Material als feste Lösung in dem Kern und/oder dem Mantel (4) einer optischen Faser enthalten ist, daß diese Faser längs einer Meßstrecke installiert ist und daß diese Faser an eine optoelektronische Meßanordnung angeschlossen ist zum Messen vorkommender Zeitkonstanten und/oder relativer Amplituden oder Phasenlagen bei verschiedenen Modulationsfrequenzen des Lumineszenzlichtes des genannten Materials.

15. Sensor nach Anspruch 14, dadurch gekennzeichnet, daß die Meßanordnung einen Extremwert längs der Meßstrecke mißt, indem sie die maximale Zeitkonstante oder die obere Grenzfrequenz des Lumineszenzlichtes mißt.

16. Sensor nach einem der Ansprüche 5 bis 15, dadurch gekennzeichnet, daß mindestens ein Linsenelement (34, 35, 36, 37) zur Verbindung der optischen Faser (22) mit den Materialbereichen (20, 21) vorhanden ist.

17. Sensor nach einem der Ansprüche 5 bis 15, dadurch gekennzeichnet, daß ein rohrförmiges Element (40) vorhanden ist, welches die optische Faser (22) und an diese angrenzendes Sensormaterial umschließt.

### Claims

1. Fiber-optical sensor for measuring physical quantities, which sensor includes at least one luminescent material which upon irradiation with excitation light, emits light of a different wave length than that of the excitation light, whereby the luminescent material/materials is/are built up of atomically localized luminescence centres (1) which are included as a solid solution in an amorphous or monocristalline bonding material (2), the bonding material being substantially optically transparent characterized in that the geometric shape of the bonding material is that of at least one optical wave conductor, for example, an optical fiber.

2. Sensor according to claim 1, characterized in that the luminescence centres consists of ions of, for example, rare earth metals.

3. Sensor according to any of the preceding claims, characterized in that the bonding material is electrically insulating and that it is chemically composed of oxides of essentially silicon, boron, germanium and posphorus and in admixture of metal oxides.

4. Sensor according to any of the preceding claims, characterized in that the intensity of the luminescence, the wave length of the luminescence, the time constant (optical time constant) describing the variation in time of the luminescence, and/or the intensity quotient of the luminescence at two wave lengths or time constants represents a measure for the quantity to be measured.

5. Sensor according to any of the preceding claims, characterized in that the luminescent material consists of at least two geometrically separated regions of material (20, 21) having mutually different absorption and/or luminescence properties with regard to the wave length or the optical time constant of the luminescent light.

6. Sensor according to claim 5, characterized in that the mutual position of said two separated regions of material (20, 21) or between said regions of material and a stationary or movable body, as for example an optical fibre, a screen (25) or the mirror (30a) represents a measure for the quantity to be measured.

7. Sensor according to claim 5 or 6, characterized in that said geometrically separated regions of material (20, 21) are arranged on a substrate material (30).

8. Sensor according to claim 5, characterized in that said two regions of material (20, 21) are arranged and are of a kind such that the excitation light will propagate, below a threshold value of temperature, within one region of material (20) only, and above said threshold value of temperature also within the other region (21) of material.

9. Sensor according to claim 8, characterized in that the optical time constants for the luminescence in the regions of material (20, 21) are considerably smaller as the transit time of the light across said regions of material.

10. Sensor according to claim 5, characterized in that it includes at least two elements (28, 29) with polarization properties, the variable position of the polarization axis of at least one of the element (29) representing a measure for the quantity to be measured.

11. Sensor according to claim 10, characterized in that the variable position of the polarization axis of at least one element (29) is a measure for the electric or magnetic field strength or for a mechanical deformation.

12. Sensor according to any of claims 4 to 11, characterized in that the intensity, the wave length and/or the time constant of the luminescent light are/is substantially temperature-independent in at least one temperature interval.

13. Sensor according to any of claims 4 to 11, characterized in that the intensity, the wave length and/or the optical time constant of the luminescent light are/is a measure for the temperature in at least one temperature interval.

14. Sensor according to any of claims 1 to 5, characterized in that the luminescent material is included as a solid solution in the core region and/or in the sheath region (4) of an optical fibre, that said fibre is located along a measuring distance, and that said fibre is connected to in opto-electronic measuring device for measuring of occurring time constants and/or relative amplitudes or phase positions at different modulation frequencies of the luminescent light of said materials.

15. Sensor according to claim 14, characterized in that said measuring device measures an extreme value along the measuring distance by measuring the maximum time constant or the upper limit frequency of the luminescent light.

16. Sensor according to any of claims 5 to 15, characterized in that at least a lens element (34, 35, 36, 37) is provided for connecting the optical fibre (22) to said regions (20,21) of material.

17. Sensor according to any of claims 5 to 15, characterized in that there is a tubular element (40) surrounding the optical fibre (22) and any sensor material adjacent thereto.

### Revendications

1. Détecteur à fibre optique pour la mesure de grandeurs physiques, lequel détecteur contient au moins un matériau luminescent qui, lorsqu'il est irradié avec une lumière d'excitation, émet un rayonnement d'une longueur d'onde différente de celle de la lumière d'excitation, le/les matériau(x) luminescent(s) étant constitué(s) par des centres luminescents (1) à luminescence à répartition atomique, qui sont contenus sous la forme d'une solution solide dans un matériau de support (2) amorphe ou monocristallin, qui est essentiellement optiquement transparent, caractérisé en ce que la forme géométrique du matériau de support est celle d'au moins un quide d'ondes optique, par exemple d'une fibre optique.

2. Détecteur suivant la revendication 1, caractérisé par le fait que les centres luminescents sont constitués par des ions, par exemple, des métaux de terres rares.

3. Détecteur suivant l'une des revendications précédentes, caractérisé par le fait que le matériau de support est électriquement isolant, et qu'il est constitué chimiquement par des oxydes essentiellement du silicium, du germanium et du phosphore, ainsi que par un mélange d'oxydes métalliques.

4. Détecteur suivant l'une des revendications précédentes, caractérisé par le fait que l'intensité de la luminescence, la longueur d'ondes de la luminescence, la constante de temps (constante de temps optique) qui détermine l'allure, dans le temps, de la luminescence, et/ou le quotient d'intensité de la luminescence est, pour deux longueurs d'ondes ou deux constantes de temps, une mesure pour la grandeur à mesurer.

5. Détecteur selon l'une des revendications précédentes, caractérisé par le fait que le matériau luminescent est constitué par deux zones de matériau (20, 21), délimitées spatialement, lesquelles zones possèdent entre elles des propriétés différentes d'absorption et/ou de luminescence du point de vue de la longueur d'ondes ou de la constante de temps optique de la lumière luminescente.

6. Détecteur suivant la revendication 5, caractérisé par le fait que la position des zones de matériau délimitées (20, 21) entre elles ou entre celles-ci et un corps fixe ou mobile, comme par exemple d'une fibre optique, d'un écran (25) ou d'un miroir (30a), est une mesure pour la grandeur à mesurer.

7. Détecteur selon la revendication 5 ou 6, caractérisé par le fait que les zones de matériau (20, 21) qui sont délimitées spatialement, sont déposées sur un substrat (30).

8. Détecteur selon la revendication 5, caractérisé par le fait que les deux zones de matériau (20, 21) sont disposées et constituées de telle façon que la lumière d'excitation se propage, en-dessous d'une valeur de seuil de température, uniquement dans la zone de matériau (20) et se propage, au-dessus de la valeur de seuil de la température, également dans la zone de matériau (21).

9. Détecteur selon la revendication 8, caractérisé par le fait que les constantes de temps optiques pour la luminescence dans les zones de matériau (20, 21) sont notablement plus faibles que la durée de transit de la lumière dans lesdites zones de matériau.

10. Détecteur selon la revendication 5, caractérisé par le fait qu'il comporte au moins deux éléments (28, 29) à propriétés de polarisation, la position variable de l'axe de polarisation dans au moins l'un (29) des éléments étant une mesure pour la grandeur à mesurer.

11. Détecteur selon la revendication 10, caractérisé par le fait que la position variable de l'axe de polarisation dans au moins l'un (29) des éléments, est une mesure pour l'intensité du champ électrique ou magnétique ou pour une déformation mécanique.

12. Détecteur selon l'une des revendications 4 à 11, caractérisé par le fait que l'intensité, la longueur d'ondes et/ou la constante de temps de la lumière luminescente sont sensiblement indépendantes de la température, au moins dans un intervalle de température.

13. Détecteur selon l'une des revendications 4 à 11, caractérisé par le fait que l'intensité, la longueur d'ondes et/ou la constante de temps optique de la lumière luminescente sont, dans au moins un intervalle de température, une mesure pour la température.

14. Détecteur selon l'une des revendications 1 à 5, caractérisé par le fait que le matériau luminescent est contenu sous la forme d'une solution solide dans le coeur et/ou dans la gaine d'une fibre optique, que cette fibre est montée le long de la voie de mesure et que cette fibre est reliée à un dispositif optoélectronique de mesure pour mesurer des constantes de temps qui se présentent et/ou des amplitudes relatives ou des positions de phase pour différentes fréquences de modulation de la lumière luminescente dudit matériau.

15. Détecteur selon la revendication 14, caractérisé par le fait que le dispositif de mesure mesure une valeur extrême le long de la voie de mesure en mesurant la constante de temps maximale ou la fréquence limite supérieure de la lumière luminescente.

16. Détecteur selon l'une des revendications 5 à 15, caractérisé par le fait qu'au moins un élément de lentille (34, 35, 36, 37) est prévu pour relier la fibre optique (22) aux zones de matériau (20, 21).

17. Détecteur selon l'une des revendications 5 à 15, caractérisé par le fait qu'il est prévu un élément de forme tubulaire (40) qui entoure la fibre optique (22) ainsi que le matériau-détecteur qui jouxte celle-ci.

**FIG.1A**

$I(\lambda,t)$

$I_S(\lambda,t)$

**FIG.1B**

$\tau$

$T_3$ $T_2$ $T_1$

11  12  Konc $Nd^{3+}$

**FIG.2A**

$I(\lambda,t)$

$I_S(\lambda,t)$

$20(\lambda_1,\tau_1)$

$21(\lambda_2,\tau_2)$

A - A

$20$

$21$

$20$

$21$

**FIG.2B**

$20(\lambda_1,\tau_1)$

$21(\lambda_2,\tau_2)$

$30$

$32$

A - A

$31$

B - B

**FIG.2C**

$20(\lambda_1,\tau_1)$

$21(\lambda_2,\tau_2)$

$33$

A - A

**FIG.3**

$I(\lambda,t)$

$I_S(\lambda,t)$

$20(\lambda_1,\tau_1)$

$21(\lambda_2,\tau_2)$

**FIG.4**

$I(\lambda,t)$

$I_S(\lambda,t)$

$20(\lambda_1,\tau_1)$

$21(\lambda_2,\tau_2)$

$30$

7

FIG. 5 A

FIG. 5 B

FIG. 6 A

FIG. 6 B

FIG. 6 C